# EUROPEAN PATENT SPECIFICATION

(11) **EP 2 420 785 B1**
(45) Date of publication and mention of the grant of the patent: **05.09.2018**
(21) Application number: 11173712.8
(22) Date of filing: 13.07.2011
(51) Int. Cl.: F25D 29/00

(54) **Fermented food refrigerator and control method thereof**
Kühlschrank für fermentierte Lebensmittel und Steuerungsverfahren dafür
Réfrigérateur pour aliments fermentés et son procédé de commande

(30) Priority: 18.08.2010 KR 20100079581
(43) Date of publication of application: 22.02.2012
(73) Proprietor: Samsung Electronics Co., Ltd., Suwon-si, Gyeonggi-do, 443-742 (KR)
(72) Inventor: Lee, Myung Ju, Gwangju (KR)
(74) Representative: Grünecker Patent- und Rechtsanwälte PartG mbB

(56) References cited:
- KR-B1- 100 788 159
- KR-B1- 100 788 160
- US-A- 5 458 186

## Description

### BACKGROUND

### 1. Field

Embodiments relate to a fermented food refrigerator, which measures a state of fermented food and stores the fermented food according to the measured state, and a control method thereof.

### 2. Description of the Related Art

Recently, a fermented food refrigerator specifically adapted to fermented food storage has been developed and placed on the market. Such a fermented food refrigerator applies an appropriate temperature to fermented food introduced into storage chambers to ferment the food, and then preserves the fermented food at an appropriate storage temperature so as to store the fermented food for a long time.

Heaters generating heat to maintain the appropriate temperature during ripening of the fermented food, and components of a refrigerating system to maintain a regular low temperature state of the fermented food during storage of the fermented food are installed in the fermented food refrigerator. When fresh fermented food is introduced into the fermented food refrigerator, a ripening process in which an appropriate temperature is supplied to the fermented food to ripen the fermented food is carried out. Such a ripening process is a process of maintaining an appropriate temperature to ripen the fermented food using heat generated from the heater. When the ripening of the fermented food through the above process is completed, a process of storing the fermented food is carried out by operating the components of the refrigerating system. Such a storage process is a process of circulating a refrigerant using the refrigerating system to maintain a proper low temperature state so as to prevent fermented food from spoiling.

The rate at which fermentation proceeds varies according to temperature. That is, if a temperature is high, the rate at which fermentation proceeds is high and thus food is rapidly ripened, and if a temperature is low, the rate at which food fermentation proceeds is low. In general, long-term fermented food storage is carried out at a low temperature.

Further, the freezing point of fermented food varies according to a fermentation degree and salinity of the fermented food. That is, if fermentation proceeds and the fermented food has high salinity, the freezing point of the fermented food is lowered. Therefore, it may be necessary to properly adjust a storage temperature of the fermented food so as to achieve ripening of the fermented food at a low temperature without freezing the fermented food.

However, the conventional fermented food refrigerator sets the same storage temperature in all cases, and then changes the storage temperature after a designated time elapses. Therefore, the conventional fermented food refrigerator is unsatisfactory in measuring an actual state of fermented food and varying the storage temperature according to the measured state of the fermented food.

US 5,458,186 A discloses a refrigerator with a kimchi seasoning and storing chamber. The refrigerator comprises a kimchi container in which a sensing unit is arranged. This is used to detect temperature, salinity and pH values or acidity. According to this application, it is possible for a user to select a particular kimchi seasoning condition and based on this selection, different seasoning conditions are performed, in particular "high", "normal" or "low". Temperature, salinity and acidity of the kimchi are then adapted with respect to the selected kimchi seasoning condition.

KR 100788160 B1 discloses a food container assembly for a refrigerator that includes a food container. A sensor part with a pair of electrodes is mounted on side walls of the food container. With this sensor part, it is possible to measure at least one or more data such as salinity, acidity or temperature of food received in the food container.

### SUMMARY

It is an object to provide a fermented food refrigerator, which sets a storage temperature of fermented food according to a measured ripening degree or salinity of the fermented food, and a control method thereof.

Additional aspects will be set forth in part in the description which follows and, in part, will be apparent from the description, or may be learned by practice of the invention.

The object is solved by the features of claim 1 or claim 9.

Advantageous embodiments are disclosed by the subclaims.

The ripening degree may be divided into an initial stage, a middle stage, and a late stage according to the acidity, and it may be determined that measurement of salinity of the fermented food is performed, upon judging that the ripening is in the middle stage.

The storage temperature may be set to a reference temperature corresponding to the ripening degree in the initial stage, upon judging that the ripening degree is in the initial stage, and be set to be uniformly lower than the current storage temperature by a designated temperature, upon judging that the ripening degree is in the late stage.

The ripening degree may be divided into an initial stage, a middle stage, and a late stage according to the acidity, and the control unit may determine that measurement of salinity of the fermented food is performed through the salinity measurement unit, upon judging that the ripening degree is in the middle stage.

The fermented food refrigerator may further include a memory unit to store a reference temperature corresponding to the ripening degree in the initial state and a temperature measurement unit to measure the current storage temperature of the fermented food, and the control unit may set the storage temperature to the reference temperature corresponding to the ripening degree in the initial stage stored in the memory unit, upon judging that the ripening degree is in the initial stage, and set the storage temperature to be uniformly lower than the current storage temperature measured by the temperature measurement unit by a designated temperature, upon judging that the ripening degree is in the late stage.

In accordance with another aspect, a control method of a fermented food refrigerator includes measuring acidity of the fermented food and judging whether or not a ripening degree of the fermented food according to the measured acidity corresponds to an initial stage, a middle stage, or a late stage, measuring salinity of the fermented food and judging whether or not the measured salinity is high or low according to the judged ripening degree, and adjusting a storage temperature according to the judged salinity.

The storage temperature may be adjusted to be higher than a reference temperature corresponding to the judged ripening degree, upon judging that the salinity is low, and be adjusted to be lower than the reference temperature, upon judging that the salinity is high.

The storage temperature may be set to be uniformly lower than the current storage temperature by a designated temperature, upon judging that the ripening degree is in the late stage.

Upon judging that the ripening degree is in the late stage, the storage temperature may be set to be uniformly lower than the current storage temperature by a first temperature, upon judging that the salinity is reference salinity corresponding to the ripening degree in the late stage, be set to be uniformly lower than the current storage temperature by a second temperature, upon judging that the salinity is lower than the reference salinity, and be set to be uniformly lower than the current storage temperature by a third temperature, upon judging that the salinity is higher than the reference salinity.

The second temperature may be lower than the first temperature, and the third temperature may be higher than the first temperature.

The salinity of the fermented food may be measured upon judging that the ripening degree in the middle stage.

Upon judging that the ripening degree is in the middle stage, the storage temperature may be adjusted to be higher than a reference temperature corresponding to the ripening degree in the middle stage, upon judging that the salinity is low, and be adjusted to be lower than the reference temperature, upon judging that the salinity is high.

The storage temperature may be set to a reference temperature corresponding to the ripening degree in the initial stage, upon judging that the ripening degree is in the initial state, and be set to be uniformly lower than the current temperature by a designated temperature, upon judging that the ripening degree is in the late stage.

Upon judging that the ripening degree is in the late stage, the storage temperature may be set to be uniformly lower than the current storage temperature by a first temperature, if the salinity measured in the middle stage is reference salinity corresponding to the ripening degree in the middle stage, be set to be uniformly lower than the current storage temperature by a second temperature, if the salinity measured in the middle stage is lower than the reference salinity, and be set to be uniformly lower than the current storage temperature by a third temperature, if the salinity measured in the middle stage is higher than the reference salinity.

The second temperature may be lower than the first temperature, and the third temperature may be higher than the first temperature.

In accordance with another aspect, a fermented food refrigerator includes an acidity measurement unit to measure acidity of the fermented food, a salinity measurement unit to measure salinity of the fermented food, and a control unit to judge whether or not a ripening degree of the fermented food according to the acidity measured by the acidity measurement unit corresponds to an initial stage, a middle stage, or a late stage, to judge whether or not the salinity measured by the salinity measurement unit is high or low according to the judged ripening degree, and to adjust a storage temperature according to the judged salinity.

The fermented food refrigerator may further include a memory unit to store a reference temperature and reference salinity corresponding to the ripening degree in each stage, and the control unit may set the storage temperature to be higher than the reference temperature stored in the memory unit, upon judging that the salinity is low, and set the storage temperature to be lower than the reference temperature, upon judging that the salinity is high.

The fermented food refrigerator may further include a temperature measurement unit to measure the current storage temperature of the fermented food, and the control unit may set the storage temperature to be uniformly lower than the current storage temperature measured by the temperature measurement unit by a designated temperature, upon judging that the ripening degree is in the late stage.

Upon judging that the ripening degree is in the late stage, the control unit may set the storage temperature to be uniformly lower than the current storage temperature measured by the temperature measurement unit by a first temperature, upon judging that the salinity is reference salinity corresponding to the ripening degree in the late stage, and the control unit may set the storage temperature to be uniformly lower than the current storage temperature by a second temperature, if the salinity is lower than the reference salinity, and set the storage temperature to be uniformly lower than the current storage temperature by a third temperature, if the salinity is higher than the reference salinity.

The second temperature may be lower than the first temperature, and the third temperature may be higher than the first temperature.

The control unit may control the salinity measure unit to measure the salinity of the fermented food upon judging that the ripening degree in the middle stage.

The fermented food refrigerator may further include a memory unit to store a reference temperature and reference salinity corresponding to the ripening degree in each stage, and the control unit may set the storage temperature to be higher than the reference temperature corresponding to the ripening degree in the middle stage stored in the memory unit, if the salinity measured in the middle stage is judged to be low, and set the storage temperature to be lower than the reference temperature, if the measured salinity is judged to be high.

The fermented food refrigerator may further include a temperature measurement unit to measure the current storage temperature of the fermented food, and the control unit may adjust the storage temperature to the reference temperature corresponding to the ripening degree in the initial stage stored in the memory unit, upon judging that the ripening degree is in the initial stage, and set the storage temperature to be uniformly lower than the current storage temperature measured by the temperature measurement unit by a designated temperature, upon judging that the ripening degree is in the late stage.

Upon judging that the ripening degree is in the late stage, the control unit may set the storage temperature to be uniformly lower than the current storage temperature by a first temperature, if the measured salinity is judged to be reference salinity corresponding to the ripening degree in the middle stage, set the storage temperature to be uniformly lower than the current storage temperature by a second temperature, if the salinity is lower than the reference salinity, and set the storage temperature to be uniformly lower than the current storage temperature by a third temperature, if the salinity is higher than the reference salinity.

The second temperature may be lower than the first temperature, and the third temperature may be higher than the first temperature.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view of a fermented food refrigerator in accordance with one embodiment;
FIG. 2 is a control block diagram of a fermented food refrigerator in accordance with one embodiment;
FIG. 3 is a flow chart illustrating a control method of a fermented food refrigerator in accordance with one embodiment;
FIG. 4 is a graph illustrating variation in storage temperature according to the control method of the fermented food refrigerator of FIG. 3;
FIG. 5 is a flow chart illustrating a control method of a fermented food refrigerator in accordance with another embodiment;
FIG. 6A is a graph illustrating variation in storage temperature according to the control method of the fermented food refrigerator of FIG. 5; and
FIG. 6B is a graph illustrating variation in storage temperature according to the control method of the fermented food refrigerator of FIG. 5.

### DETAILED DESCRIPTION

Reference will now be made in detail to the embodiments, examples of which are illustrated in the accompanying drawings, wherein like reference numerals refer to like elements throughout.

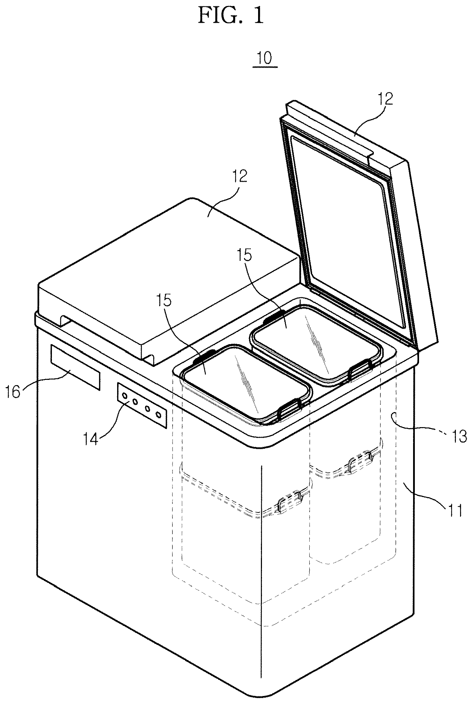

FIG. 1 is a perspective view of a fermented food refrigerator in accordance with one embodiment.

A fermented food refrigerator 10 in accordance with this embodiment includes a plurality of storage chambers 13 provided in a cabinet 11 forming a box-shaped external appearance of the fermented food refrigerator 10 so as to ripen fermented food and store the fermented food at a low temperature, heaters (not shown) to supply heat to ripen the fermented food, and a refrigerating system (not shown) to lower the temperature of the storage chambers 13 so as to store the fermented food at the low temperature. The refrigerating system includes a compressor, a condenser, and an evaporator.

The plurality of storage chambers 13 is prepared in a pair such that the storage chambers 13 are arranged in parallel at both sides of the cabinet 11 and are provided with opened upper surfaces. Doors 12 are hinged to the opened upper surfaces of the storage chambers 13 so as to be vertically rotated, thereby enabling the storage chambers 13 to receive fermented food. Further, a plurality of fermented food storage containers 15 is provided in each storage chamber 13.

The heaters are provided to supply heat of an appropriate temperature to fermented food introduced into the fermented food storage containers 15 so as to ripen the fermented food. The heaters, which are installed to supply heat to the fermented food storage containers 15, may be provided as a sheet manufactured by covering electric wires integrally formed with a rectangular sheath made of aluminum.

An operation unit 14 and a display unit 16 are provided on the front surface of the cabinet 11. The display unit 16 displays storage temperature and storage time, and the operation unit 14 receives user input to operate the fermented food refrigerator 10. The operation unit 14 and the display unit 16 may be integrated into a touch screen type, or be provided separately. The display unit 16 may include LCDs, LEDs, or PDPs, but is not limited thereto. The operation unit 14 may include switches, buttons, slide bars, and dials, but is not limited thereto.

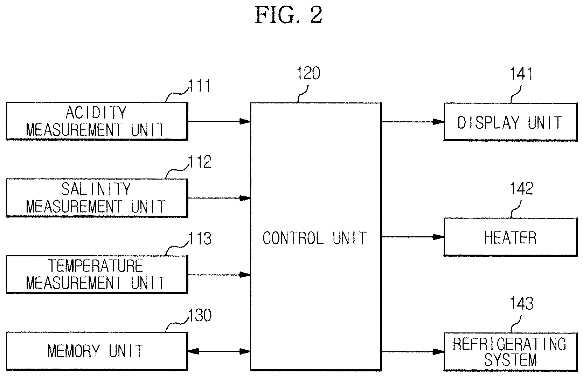

FIG. 2 is a control block diagram of a fermented food refrigerator in accordance with one embodiment.

With reference to FIG. 2, a fermented food refrigerator 10 in accordance with this embodiment includes an acidity measurement unit 111, a salinity measurement unit 112, a temperature measurement unit 113, a control unit 120, a memory unit 130, a display unit 141, a heater 142, and a refrigerating system 143.

The acidity measurement unit 111 includes a sensor to measure acidity of the fermented food. Here, acidity means an acidity level of a solution or an intensity of an acid. In more detail, an acidity level of a solution is generally expressed by pH (hydrogen exponent), and the pH means the concentration of hydrogen ions in 1l of the solution. Further, an intensity of an acid means of an intensity of protons emitted from the acid, when the acid is dissolved in a solvent.

That is, the acidity measurement unit 111 measures a pH value or acidity of gas or a fermented food liquid generated from fermented food.

Measurement of acidity of fermented food using the acidity measurement unit 111 is carried out through one of methods described below.

First, there is a non-contact method in which acidity of fermented food within a storage chamber is judged by sensing gas generated from the fermented food. In the non-contact method, the acidity measurement unit 111 may be installed at the upper portion of the storage chamber proper to sense the gas generated from the fermented food, and may include a semiconductor thin film sensor or a solid electrolyte sensor.

Second, there is a contact method in which acidity of fermented food is judged by sensing a concentration of hydrogen ions in a fermented food liquid. In the contact method, since the acidity measurement unit 111 needs to contact the fermented food liquid, the acidity measurement unit 111 may be installed within a storage chamber, and may include a pH sensor.

The salinity measurement unit 112 includes a salinity sensor to measure salinity of the fermented food. That is, the salinity measurement unit 112 measures salinity of the fermented food through contact between the salinity sensor and a fermented food liquid or the fermented food. Measurement of salinity of the fermented food using the salinity measurement unit 112 is carried out through one of methods described below.

First, there is a refractive index measurement method using a principle in which, when light generated from a laser module is irradiated onto a light-transmitting target article, the light is refracted by the article and a refractive index of the target article varies according to the salinity of the target article.

Second, there is a chloride ion (CI-) concentration measurement method in which salinity of a target article is calculated by injecting a reagent containing silver ions (Ag+) into the target article and then calculating a concentration of chloride ions (CI-) through an amount of precipitated silver chloride (AgCl).

Third, there is an electric conductivity measurement method in which salinity of a target article is calculated by applying voltage to a pair of electrodes contacting the target article and then measuring current. This method uses a principle in which electric conductivity of the target article is varied according to an ion concentration of the target article. Here, the applied voltage may be generated using a DC power supply or a high-frequency AC power supply.

The temperature measurement unit 113 is installed on a storage chamber or a fermented food storage container, thus measuring storage temperature of the storage chamber or the fermented food storage container. Further, the temperature measurement unit 113 transmits the measured temperature as an electrical signal to the control unit 120.

The control unit 120 receives signals from the acidity measurement unit 111, the salinity measurement unit 112, and the temperature measurement unit 113, and then controls the display unit 141, the heater 142, and the refrigerating system 143 based on the received signals and a reference temperature stored in the memory unit 130.

Particularly, in this embodiment, the control unit 120 judges a ripening degree of the fermented food based on the acidity measured by the acidity measurement unit 111. Further, the control unit 120 sets a storage temperature of the fermented food based on the judged ripening degree or the salinity measured by the salinity measurement unit 112.

Hereinafter, operation of the control unit 120 will be described in detail.

The control unit 120 judges the ripening degree of the fermented food. The ripening degree of the fermented food may be divided into three stages, i.e., an initial stage, a middle stage, and a late stage, according to the acidity of the fermented food measured by the acidity measurement unit 111.

As the ripening degree of the fermented food transitions from the initial stage to the late stage, fermentation of the fermented food proceeds. Here, when fermentation of the fermented food proceeds, a sour taste of the fermented food becomes strong and thus the acidity of the fermented food is lowered. That is, as the ripening degree of the fermented food transitions from the initial stage to the late stage, the acidity of the fermented food is lowered.

In this embodiment, Table 1 below indicates the criteria by which the ripening degree is divided according to acidity.

**[Table 1]**

| | |
|---|---|
| Acidity (pH) | Ripening degree |
| More than 5.2 | Initial stage |
| 5.2∼4.8 | Middle stage |
| Less than 4.8 | Late stage |

With reference to Table 1, this embodiment defines the ripening degree of the fermented food as the initial stage if the acidity of the fermented food is more than 5.2, defines the ripening degree of the fermented food as the middle stage if the acidity of the fermented food is 5.2∼4.8, and defines the ripening degree of the fermented food as the late stage if the acidity of the fermented food is less than 4.8. For example, if the acidity measured by the acidity measurement unit 111 is 6.0, the ripening degree of stored fermented food is judged as the initial stage.

The definition of the ripening degree according to the acidity, as stated in Table 1, may be obtained experimentally in consideration of storage temperature and storage time of the fermented food, or may be varied by a designer. That is, the definition of the ripening degree may be modified by varying the above-described values of the acidity. Further, the ripening degree of fermented food may be divided into two stages or larger number of stages than three stages. However, the stages of the ripening degree of the fermented food may be set to be in the ranges which a user at least feels a difference between the stages of the ripening degree of the fermented food.

The control unit 120 sets the storage temperature based on the ripening degree or the salinity.

As the salinity of the fermented food is raised, the freezing point of the fermented food is lowered. Further, the freezing point of the fermented food in the late stage, in which an osmotic action is finished, is lower than that of the fermented food in the initial stage.

In this embodiment, the control unit 120, using the above principle, controls the storage temperature based on the salinity and the ripening degree so as to enable low-temperature ripening of the fermented food so as to achieve long-term fermented food storage without freezing the fermented food.

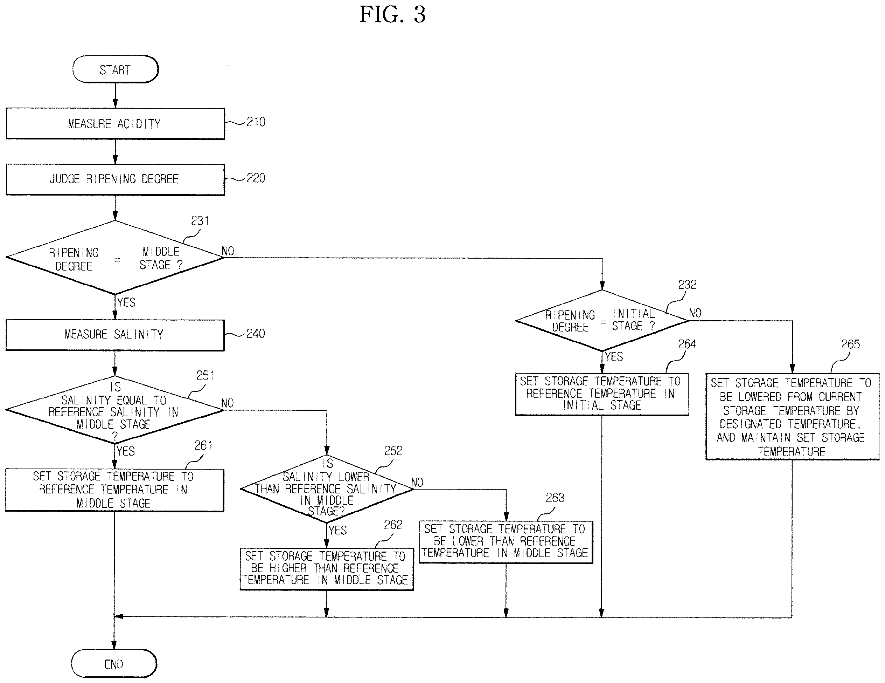

A method of setting the storage temperature through the control unit 120 based on the ripening degree and the salinity will be described later in detail with reference to FIGS. 3 to 6B.

The memory unit 130 stores the criteria to judge the ripening degree of the fermented food according to the acidity of the fermented food and the criteria to judge whether or not the salinity of the fermented food is low or high according to the ripening degree of the fermented food. Further, the memory unit 130 stores reference temperatures corresponding to the ripening degree in the initial stage and the middle stage and values by which the storage temperature is raised or lowered from the reference temperature according to salinity. The reference temperatures, stored in the memory unit 130, corresponding to the ripening degree in the initial stage and the middle stage may be equal to or different from each other.

The display unit 141 displays an operating state of the fermented food refrigerator, various set values, and temperatures.

The heater 142 serves to raise the temperature in the fermented food storage container to ripen fermented food, and may be attached to the fermented food storage container.

The refrigerating system 143 includes a condenser, a compressor, and an evaporator, and lowers the temperature in the fermented food storage container to store fermented food at a low temperature.

FIG. 3 is a flow chart illustrating a control method of a fermented food refrigerator in accordance with one embodiment.

First, the acidity measurement unit measures acidity of the fermented food (operation 210), and the control unit judges the ripening degree of the fermented food based on the measured acidity (operation 220). In more detail, the control unit defines the ripening degree of the fermented food as the initial stage if the measured acidity (pH) of the fermented food is more than 5.2, defines the ripening degree of the fermented food as the middle stage if the measured acidity (pH) of the fermented food is 5.2∼4.8, and defines the ripening degree of the fermented food as the late stage if the measured acidity (pH) of the fermented food is less than 4.8.

Further, the control unit judges whether or not the judged ripening degree satisfies a storage temperature adjustment condition, and controls the salinity measurement unit to measure salinity of the fermented food upon judging that the judged ripening degree satisfies the storage temperature adjustment condition.

For example, in a case where the fermented food is napa cabbage kimchi in the initial stage, osmotic pressure equilibrium between the kimchi and seasoning is not achieved and thus a salinity difference between the kimchi and the seasoning occurs. Thereby, if the storage temperature is set based on the salinity of the kimchi in the initial stage, an error may be generated.

Therefore, the control unit defines the storage temperature adjustment condition as the middle stage, and controls the salinity measurement unit to measure salinity of the kimchi only in the middle stage.

That is, the control unit judges whether or not the ripening degree of the fermented food is in the middle stage (operation 231). If it is judged that the ripening degree of the fermented food is in the middle stage as a result of the judgment of the ripening degree, the control unit measures salinity of the fermented food (operation 240), and judges whether or not the measured salinity is equal to or lower or higher than reference salinity corresponding to the ripening degree in the middle stage (operation 251 and operation 252). Table 2 below indicates the criteria to judge whether or not the measured salinity is low or high when the ripening degree of the fermented food is in the middle stage.

**[Table 2]**

| | |
|---|---|
| 0∼2% | Low salinity |
| 2∼3% | Reference salinity |
| 3∼5% | High salinity |

With reference to FIG. 2, in this embodiment, the reference salinity of fermented food in the middle stage is defined as 2∼3%. In this embodiment, if the measured salinity of the fermented food is 0∼2%, the salinity of the fermented food is defined to be low, and if the measured salinity of the fermented food is 3∼5%, the salinity of the fermented food is defined to be high.

Although the values, as stated in Table 2, are obtained through experimentation, the values may be varied by a designer. That is, the judgment as to whether or the measured salinity is high or low may be modified by varying the above values or dividing salinity into a larger number of stages.

The control unit adjusts the storage temperature based on the salinity judged through Table 2.

As the salinity of the fermented food is raised, the freezing point of the fermented food is lowered. The embodiment discloses a method of adjusting the storage temperature using such a principle so as to enable low-temperature ripening of the fermented food to achieve long-term fermented food storage while preventing freezing of the fermented food.

Concretely, upon judging that the salinity of the stored fermented food is equal to the reference salinity in the middle stage (operation 251), the control unit sets the storage temperature to the reference temperature in the middle stage (operation 261).

Further, upon judging that the salinity of the stored fermented food is lower than the reference salinity in the middle stage (operation 252), the control unit sets the storage temperature to be higher than the reference temperature in the middle stage (operation 262). Here, a value by which the storage temperature is raised from the reference temperature may be in the range of 0.3∼0.5°C. Since the freezing point of fermented food having low salinity is relatively high, the storage temperature of the fermented food having low salinity is set to be higher than the reference temperature corresponding to the ripening degree in the middle stage so as to prevent freezing of the fermented food.

Further, upon judging that the salinity of the stored fermented food is higher than the reference salinity in the middle stage (operation 252), the control unit sets the storage temperature to be lower than the reference temperature in the middle stage (operation 263). Here, a value by which the storage temperature is lowered from the reference temperature may be in the range of 0.5∼1°C. Since the freezing point of fermented food having high salinity is relatively low, the storage temperature of the fermented food having high salinity is set to be lower than the reference temperature corresponding to the ripening degree in the middle stage so as to enable low-temperature ripening of the fermented food to achieve long-term fermented food storage.

If the judged ripening degree does not satisfy the storage temperature adjustment condition, the control unit sets the storage temperature based on the ripening degree. That is, the control unit sets the storage temperature without consideration of the salinity, if the ripening degree is in the initial stage or the late stage.

Concretely, upon judging that the ripening degree is in the initial stage (operation 232), the control unit sets the storage temperature to be reference temperature in the initial stage (operation 264).

Further, upon judging that the ripening degree is in the late stage (operation 232), the control unit sets the storage temperature to be lower than the current storage temperature by a designated temperature and then maintains the set storage temperature (operation 265). Further, if fermented food in the late stage is stored directly, the storage temperature may be set to be lower than the reference temperature in the middle stage by a designated temperature and the set storage temperature may be maintained. Here, a value by which the storage temperature is lowered may be in the range of 0.5∼1°C. Using the principle that the freezing point of ripened fermented food in which osmotic action is finished is lower than fermented food in which a ripening degree is low, the ripened fermented food may be ripened at a low temperature.

Therefore, the storage temperature of fermented food is controlled based on the ripening degree or the salinity of the fermented food through the control method of FIG. 3, thereby achieving long-term fermented food storage through low-temperature ripening and preventing freezing of the fermented food. Further, differing from the conventional control method in which the same storage temperature is determined in all cases and is then changed after a designated time elapses, the control method of the fermented food refrigerator of FIG. 3 provides a system which senses an actual state of fermented food and changes the storage temperature of the fermented food according to the state of the fermented food.

In this embodiment, definition of the ripening degree according to acidity, reference temperatures in the initial and middle stages, and values by which the storage temperature is raised or lowered from the reference temperatures may be modified by a designer, and be varied according to respective systems.

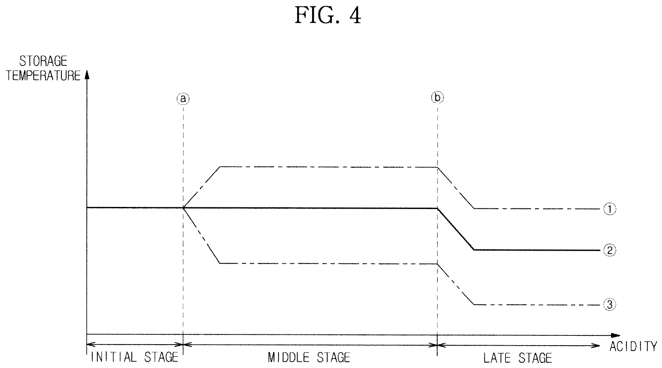

FIG. 4 is a graph illustrating variation in the storage temperature according to the control method of the fermented food refrigerator of FIG. 3.

In FIG. 4, a point of time 'a' means a point of time when acidity (pH) of fermented food is 5.2 and is located at the boundary between the initial stage and the middle stage, a point of time 'b' means a point of time when acidity (pH) of the fermented food is 4.8 and is located at the boundary between the middle stage and the late stage. That is, a section up to the point of time 'a' where acidity (pH) of the fermented food exceeds 5.2 corresponds to the initial stage, and a section between the point of time'a' and the point of time 'b' where acidity (pH) of the fermented food is in the range of 5.2∼4.8 corresponds to the middle stage. Further, a section after the point of time 'b' where acidity (pH) of the fermented food is less than 4.8 corresponds to the late stage.

With reference to FIG. 4, when the ripening degree of fermented food is in the initial stage, the storage temperature is set to the reference temperature in the initial stage and is maintained during the initial stage.

Further, when the ripening degree of fermented food is in the middle stage, the graph is divided into curves 1, 2 and 3 according to salinity of the fermented food. That is, in the middle stage, salinity of the fermented food is measured, and the variation aspect of the storage temperature varied according to the measured salinity.

The curve 1 represents variation in the storage temperature if fermented food having low salinity of 0∼2% is stored. In more detail, in case of fermented food having low salinity, the storage temperature is raised from the reference temperature in the middle stage by about 0.3∼0.5°C.

For example, when the reference temperature in the middle stage is -1°C, the storage temperature of the fermented food is raised to -0.7∼-0.5°C.

The curve 2 represents variation in the storage temperature if fermented food having salinity of 2∼3% is stored. In this case, the storage temperature is set to the reference temperature in the middle stage. Although in this embodiment, the reference temperatures in the initial stage and the middle stage are set to be equal to each other, the reference temperatures in the initial stage and the middle stage may be different.

The curve 3 represents variation in the storage temperature if fermented food having high salinity of 3∼5% is stored. In more detail, in case of fermented food having high salinity, the storage temperature is lowered from the reference temperature in the middle stage by about 0.5∼1°C.

Finally, when the ripening degree of fermented food is in the late stage, the current storage temperatures are respectively lowered by a designated temperature, and the lowered storage temperatures are maintained. That is, the current storage temperatures in the curves 1, 2 and 3 are lowered by about 0.5∼1°C.

In FIG. 4, definition of the ripening degree according to acidity and values by which the storage temperature is raised or lowered from the reference temperatures may be modified by a designer, and be varied according to respective systems.

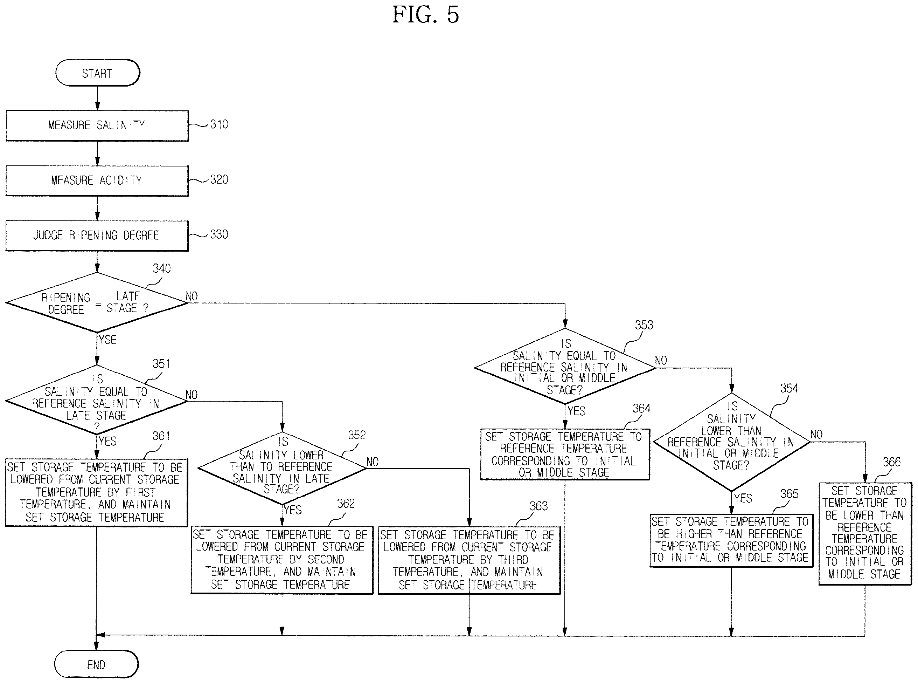

FIG. 5 is a flow chart illustrating a control method of a fermented food refrigerator in accordance with another embodiment.

First, the salinity measurement unit measures salinity of a fermented food liquid (operation 310), and the acidity measurement unit measures acidity of the fermented food (operation 320). Further, the control unit judges the ripening degree of the fermented food based on the measured acidity (operation 330), and judges whether or not the measured salinity is low or high (operations 351, 352, 353, and 354). Further, the control unit controls the storage temperature of the fermented food according to the judged level of the salinity (operations 361, 362, 363, 364, 365, and 366).

Hereinafter, a process of judging whether or not the salinity of the fermented food is low or high based on reference salinity according to the ripening degree will be described in detail.

Tables 3 and 4 below indicate the criteria to judge whether or not the salinity is low or high according to the ripening degree.

**[Table 3]**

| | |
|---|---|
| 1∼3% | Low salinity |
| 3∼4% | Reference salinity in initial stage |
| 4∼7% | High salinity |

With reference to Table 3, in this embodiment, the reference salinity of fermented food in the initial stage is defined as 3∼4%. If the measured salinity of the fermented food is 1∼3%, the salinity of the fermented food is defined to be low, and if the measured salinity of the fermented food is 4∼7%, the salinity of the fermented food is defined to be high. For example, the control unit judges that fermented food is low-salinity fermented food, if the measured salinity of a fermented food liquid in the initial stage is 2%.

**[Table 4]**

| | |
|---|---|
| 0∼1.5% | Low salinity |
| 1.5∼2.5% | Reference salinity in late stage |
| 2.5∼4.5% | High salinity |

With reference to Table 4, in this embodiment, the reference salinity of the fermented food in the late stage is defined as 1.5∼2.5%. If the measured salinity of the fermented food is 0∼1.5%, the salinity of the fermented food is defined to be low, and if the measured salinity of the fermented food is 2.5∼4.5%, the salinity of the fermented food is defined to be high. For example, the control unit judges that the fermented food is low-salinity fermented food, if the measured salinity of a fermented food liquid in the late stage is 1%.

The criteria to judge whether or not salinity of fermented food in the middle stage is low or high are the same as in Table 2, and a description thereof will thus be omitted.

The values of salinity of the fermented food in the initial stage of Table 3 are higher than the values of salinity of the fermented food in the middle stage of Table 2 by about 1∼2%. These values are obtained in consideration of the fact that salinity of the liquid of the fermented food in the initial stage is higher than that of fermented food, ripening of which has proceeded.

Further, the values of salinity of the fermented food in the late stage of Table 4 are lower than the values of salinity of the fermented food in the middle stage of Table 2 by about 0∼0.5%. These values are obtained in consideration of the fact that salinity of the liquid of the fermented food is lowered as ripening of the fermented food proceeds.

These values of salinity are obtained through experimentation, and may be varied by a designer. That is, the judgment as to whether or the salinity is high or low may be modified by varying the above values or dividing salinity into a larger number of stages.

Hereinafter, a method of controlling the storage temperature of fermented food according to a result of the judgment as to whether or not salinity is low or high will be described.

First, the method of controlling the storage temperature of fermented food if the ripening degree of the fermented food is in the initial or middle stage (operation 340) will be described. In this case, upon judging that the salinity of the fermented food is equal to the reference salinity in the initial or middle stage (operation 353), the control unit sets the storage temperature to the reference temperature corresponding to the ripening degree in the initial or middle stage (operation 364).

Further, upon judging that the salinity of the stored fermented food is lower than the reference salinity in the initial or middle stage (operation 354), the control unit sets the storage temperature to be higher than the reference temperature corresponding to the ripening degree in the initial or middle stage (operation 365). Here, a value by which the storage temperature is raised from the reference temperature may be in the range of 0.3∼0.5°C. Since the freezing point of fermented food having low salinity is relatively high, the storage temperature of the fermented food having low salinity is set to be higher than the reference temperature so as to prevent freezing of the fermented food.

Further, upon judging that the salinity of the stored fermented food is higher than the reference salinity in the initial or middle stage (operation 354), the control unit sets the storage temperature to be lower than the reference temperature corresponding to the ripening degree in the initial or middle stage (operation 366). Here, a value by which the storage temperature is lowered from the reference temperature may be in the range of 0.5-1 °C. Since the freezing point of fermented food having high salinity is relatively low, the storage temperature of the fermented food having high salinity is set to be lower than the reference temperature so as to enable low-temperature ripening of the fermented food to achieve long-term fermented food storage.

Next, the method of controlling the storage temperature of fermented food if the ripening degree of the fermented food is in the late stage (operation 340) will be described. In this case, the control unit varies a temperature by which the storage temperature is lowered from the current storage temperature according to the salinity. Further, if fermented food in the late stage is stored directly, the storage temperature may be lowered from the reference temperature in the middle stage by a designated temperature, which varies according to the salinity. That is, the freezing point of the fermented food is lowered as the salinity of the fermented food is raised, and thus the storage temperature of the fermented food having high salinity in the late stage is lower than that of the fermented food having low salinity in the late stage.

When it is judged that the salinity of the stored fermented food is in the reference salinity corresponding to the ripening degree in the late stage (operation 350), the control unit sets the storage temperature to be lower than the current storage temperature by a first temperature and maintains the set storage temperature (operation 361). Here, the first temperature may be 0.6∼0.8°C.

Further, upon judging that the salinity of the stored fermented food is lower than the reference salinity corresponding to the ripening degree in the late stage (operation 352), the control unit sets the storage temperature to be lower than the current storage temperature by a second temperature and maintains the set storage temperature (operation 362). Here, the second temperature may be 0.5∼0.6°C.

Further, upon judging that the salinity of the stored fermented food is higher than the reference salinity corresponding to the ripening degree in the late stage (operation 352), the control unit sets the storage temperature to be lower than the current storage temperature by a third temperature and maintains the set storage temperature (operation 363). Here, the third temperature may be 0.8∼1.0°C.

In this embodiment, the values of the storage temperatures raised or lowered from the reference temperature in the initial or middle stage and the value of the storage temperature lowered from the reference temperature in the late stage are not important. This embodiment provides a process for preventing freezing of fermented food and achieving low-temperature ripening of the fermented food by setting the storage temperature of the fermented food in consideration of the ripening degree and salinity of the fermented food.

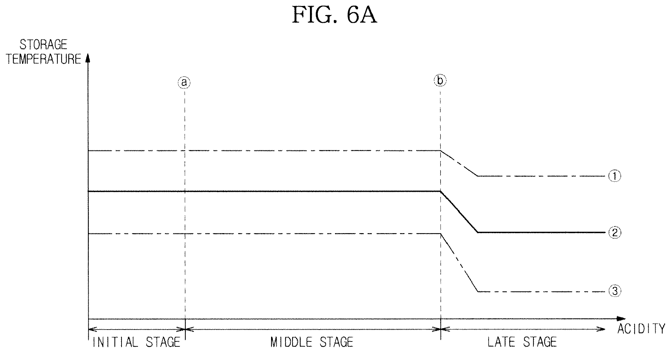

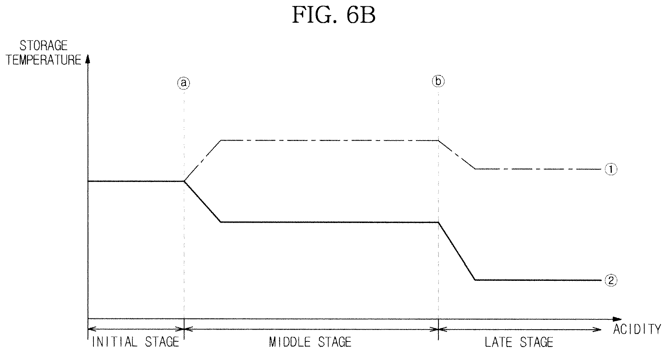

FIGS. 6A and 6B are graphs illustrating variations of storage temperature according to the control method of the fermented food refrigerator of FIG. 5.

In FIGS. 6A and 6B, definitions of a point of time 'a' and a point of time 'b' are the same as those in FIG. 4, and thus a detailed description thereof will be omitted.

FIG. 6A is the graph illustrating variation in the storage temperature of fermented food, if salinity of the fermented food is uniform while ripening of the fermented food proceeds. For example, the fermented food maintains low salinity or high salinity from the initial stage to the late stage.

In more detail, a curve 1 represents a case in which the salinity of fermented food measured while ripening of the fermented food proceeds from the initial stage to the late stage is lower than the reference salinity.

In the curve 1, in the initial stage, the storage temperature of the fermented food is set to be higher than the reference temperature in the initial stage, and the set storage temperature is maintained until the middle stage. Then, when the ripening degree of the fermented food enters the late stage, the storage temperature of the fermented food is lowered from the storage temperature in the middle stage by about 0.5∼0.6.

A curve 2 represents a case in which the salinity of fermented food measured from the initial stage to the late stage is equal to the reference salinity.

In the curve 2, in the initial stage, the storage temperature of the fermented food is set to the reference temperature in the initial stage, and the set storage temperature is maintained until the middle stage. Then, when the ripening degree of the fermented food enters the late stage, the storage temperature of the fermented food is lowered from the storage temperature in the middle stage by about 0.6∼0.8°C.

A curve 3 represents a case in which the salinity of fermented food measured from the initial stage to the late stage is higher than the reference salinity.

In the curve 3, in the initial stage, the storage temperature of the fermented food is set to be lower than the reference temperature in the initial stage, and the set storage temperature is maintained until the middle stage. Then, when the ripening degree of the fermented food enters the late stage, the storage temperature of the fermented food is lowered from the storage temperature in the middle stage by about 0.8∼1°C.

FIG. 6B is the graph illustrating variation in the storage temperature of fermented food, if salinity of the fermented food is varied while ripening of the fermented food proceeds. The graph of FIG. 6B illustrates a case in which it is judged that salinity of the fermented food measured in the initial stage is equal to the reference salinity in the initial stage but salinity of the fermented food measured in the middle stage is lower or higher than the reference salinity in the middle stage.

In more detail, a curve 1 represents a case in which the salinity of fermented food measured in the initial stage is equal to the reference salinity in the initial stage but the salinity of the fermented food measured in the middle stage is lower than the reference salinity in the middle stage. That is, the curve 1 represents a case in which the fermented food is changed into a low-salinity state when the ripening degree of the fermented food is in the middle stage.

In the curve 1, when the ripening degree of the fermented food is in the initial stage, the storage temperature of the fermented food is set to be equal to the reference temperature in the initial stage. Then, when the ripening degree of the fermented food transitions from the initial stage to the middle stage, the fermented food is changed into the low-salinity state and the storage temperature of the fermented food is set to be higher than the reference temperature in the middle stage, and when the ripening degree of the fermented food enters the late stage, the storage temperature of the fermented food is lowered from the storage temperature in the middle stage by about 0.5∼0.6°C.

In more detail, a curve 2 represents a case in which the salinity of fermented food measured in the initial stage is equal to the reference salinity in the initial stage but the salinity of the fermented food measured in the middle stage is higher than the reference salinity in the middle stage. That is, the curve 2 represents a case in which the fermented food is changed into a high-salinity state when the ripening degree of the fermented food is in the middle stage.

In the curve 2, when the ripening degree of the fermented food is in the initial stage, the storage temperature of the fermented food is set to be equal to the reference temperature in the initial stage. Then, when the ripening degree of the fermented food transitions from the initial stage to the middle stage, the fermented food is changed into the high-salinity state and the storage temperature of the fermented food is set to be lower than the reference temperature in the middle stage, and when the ripening degree of the fermented food enters the late stage, the storage temperature of the fermented food is lowered from the storage temperature in the middle stage by about 0.8∼1.0.

Variations of the storage temperature of fermented food according to the control method of the fermented food refrigerator of FIG. 5 have thus far been described in detail with reference to FIGS. 6A and 6B. The ripening degree according to acidity and the values by which the storage temperature raised or lowered from the reference temperatures in the initial and middle stages, as shown in FIGS. 6A and 6B, are not limiting. That is, the ripening degree according to acidity and the values of the storage temperature raised or lowered from the reference temperatures in the initial and middle stages may be modified as long as the variations of the storage temperature are set based on the ripening degree and salinity of the fermented food.

For example, although FIGS. 6A and 6B illustrate that the reference temperature in the initial stage and the reference temperature in the middle stage are equal, the reference temperature in the initial stage and the reference temperature in the middle stage may be different.

Further, although FIG. 6B illustrates that only variation in salinity from the initial stage to the middle stage is considered, variation in salinity from the middle stage to the late stage may be also considered.

As is apparent from the above description, in a fermented food refrigerator and a control method thereof in accordance with one embodiment, a storage temperature of the fermented food is set according to the measured ripening degree or salinity of the fermented food, and thus the storage temperature is set to the optimum temperature proper for the current state of the fermented food.

Further, the storage temperature of the fermented food is lowered or raised from a reference temperature according to the ripening degree or salinity of the fermented food, thereby achieve long-term fermented food storage and preventing freezing of the fermented food.

Although a few embodiments have been shown and described, it would be appreciated by those skilled in the art that changes may be made in these embodiments without departing from the principles of the invention, the scope of which is defined in the claims.

## Claims

1. A control method of a fermented food refrigerator (10) comprising:
measuring (210) acidity of a fermented food and judging (231, 232) whether or not a ripening degree of the fermented food according to the measured acidity corresponds to an initial stage, a middle stage, or a late stage;
measuring (240) salinity of the fermented food and judging (251, 252) whether or not the measured salinity is high or low according to the judged ripening degree; and
adjusting (261, 262, 263) a storage temperature according to the judged salinity.

2. The control method according to claim 1, wherein:
the storage temperature is adjusted (262) to be higher than a reference temperature corresponding to the judged ripening degree, upon judging that the salinity is low; and
the storage temperature is adjusted (263) to be lower than the reference temperature, upon judging that the salinity is high.

3. The control method according to claim 1, wherein, upon judging (351) that the ripening degree is in the late stage:
the storage temperature is set (361) to be uniformly lower than the current storage temperature by a first temperature, upon judging that the salinity is reference salinity corresponding to the ripening degree in the late stage;
the storage temperature is set (362) to be uniformly lower than the current storage temperature by a second temperature, upon judging (352) that the salinity is lower than the reference salinity; and
the storage temperature is set (363) to be uniformly lower than the current storage temperature by a third temperature, upon judging that the salinity is higher than the reference salinity.

4. The control method according to claim 3, wherein:
the second temperature is lower than the first temperature; and
the third temperature is higher than the first temperature.

5. The control method according to claim 1, wherein:
the salinity of the fermented food is measured (240) upon judging (231) that the ripening degree in the middle stage; and
upon judging (251) that the ripening degree is in the middle stage, the storage temperature is adjusted to be higher than a reference temperature corresponding to the ripening degree in the middle stage, upon judging that the salinity is low, and is adjusted to be lower than the reference temperature, upon judging that the salinity is high.

6. The control method according to claim 5, wherein:
the storage temperature is set to a reference temperature corresponding to the ripening degree in the initial stage, upon judging that the ripening degree is in the initial state; and
the storage temperature is set to be uniformly lower than the current temperature by a designated temperature, upon judging that the ripening degree is in the late stage.

7. The control method according to claim 6, wherein, upon judging that the ripening degree is in the late stage:
the storage temperature is set to be uniformly lower than the current storage temperature by a first temperature, if the salinity measured in the middle stage is reference salinity corresponding to the ripening degree in the middle stage;
the storage temperature is set to be uniformly lower than the current storage temperature by a second temperature, if the salinity measured in the middle stage is lower than the reference salinity; and
the storage temperature is set to be uniformly lower than the current storage temperature by a third temperature, if the salinity measured in the middle stage is higher than the reference salinity.

8. The control method according to claim 7, wherein:
the second temperature is lower than the first temperature; and
the third temperature is higher than the first temperature.

9. A fermented food refrigerator (10) comprising:
an acidity measurement unit (111) to measure acidity of a fermented food;
a salinity measurement unit (112) to measure salinity of the fermented food; and
a control unit (120) to judge whether or not a ripening degree of the fermented food according to the acidity measured by the acidity measurement unit corresponds to an initial stage, a middle stage, or a late stage, to judge whether or not the salinity measured by the salinity measurement unit is high or low according to the judged ripening degree, and to adjust a storage temperature according to the judged salinity.

10. The fermented food refrigerator according to claim 9, further comprising:
a memory unit (130) to store a reference temperature and reference salinity corresponding to the ripening degree in each stage, wherein:
the control unit (120) sets the storage temperature to be higher than the reference temperature stored in the memory unit, upon judging that the salinity is low; and
the control unit (120) sets the storage temperature to be lower than the reference temperature, upon judging that the salinity is high.

11. The fermented food refrigerator according to claim 10, wherein, upon judging that the ripening degree is in the late stage:
the control unit (120) sets the storage temperature to be uniformly lower than the current storage temperature measured by the temperature measurement unit by a first temperature, upon judging that the salinity is reference salinity corresponding to the ripening degree in the late stage;
the control unit (120) sets the storage temperature to be uniformly lower than the current storage temperature by a second temperature, if the salinity is lower than the reference salinity; and
the control unit (120) sets the storage temperature to be uniformly lower than the current storage temperature by a third temperature, if the salinity is higher than the reference salinity.

12. The fermented food refrigerator according to claim 11, wherein:
the second temperature is lower than the first temperature; and
the third temperature is higher than the first temperature.

13. The fermented food refrigerator according to claim 9, further comprising a memory unit (130) to store a reference temperature and reference salinity corresponding to the ripening degree in each stage, wherein:
the control unit (120) controls the salinity measure unit to measure the salinity of the fermented food upon judging that the ripening degree is in the middle stage;
the control unit (120) sets the storage temperature to be higher than the reference temperature corresponding to the ripening degree in the middle stage stored in the memory unit, if the salinity measured in the middle stage is judged to be low; and
the control unit (120) sets the storage temperature to be lower than the reference temperature, if the measured salinity is judged to be high.

14. The fermented food refrigerator according to claim 13, further comprising:
a temperature measurement unit (113) to measure the current storage temperature of the fermented food, wherein:
the control unit (120) adjusts the storage temperature to the reference temperature corresponding to the ripening degree in the initial stage stored in the memory unit (130), upon judging that the ripening degree is in the initial stage; and
the control unit (120) sets the storage temperature to be uniformly lower than the current storage temperature measured by the temperature measurement unit by a designated temperature, upon judging that the ripening degree is in the late stage.

15. The fermented food refrigerator according to claim 14, wherein, upon judging that the ripening degree is in the late stage:
the control unit (120) sets the storage temperature to be uniformly lower than the current storage temperature by a first temperature, if the measured salinity is reference salinity corresponding to the ripening degree in the middle stage;
the control unit (120) sets the storage temperature to be uniformly lower than the current storage temperature by a second temperature, if the salinity is lower than the reference salinity; and
the control unit (120) sets the storage temperature to be uniformly lower than the current storage temperature by a third temperature, if the salinity is higher than the reference salinity.

## Patentansprüche

1. Steuerverfahren für einen Kühlschrank (10) für fermentierte Lebensmittel, welches aufweist:
Messen (210) des Säuregehalts eines fermentierten Nahrungsmittels und Beurteilen (231, 232), ob ein Reifegrad des fermentierten Nahrungsmittels entsprechend zum gemessenen Säuregehalt in einem Anfangsstadium, Mittelstadium oder Endstadium ist;
Messen (240) eines Salzgehaltes des fermentierten Nahrungsmittels und Beurteilen (251,252), ob der gemessene Salzgehalt hoch oder niedrig entsprechend zum beurteilten Reifungsgrad ist, und
Justieren (261, 262, 263) einer Speichertemperatur entsprechend zum beurteilten Salzgehalt.

2. Steuerverfahren nach Anspruch 1, wobei die Speichertemperatur so justiert wird (262), dass sie höher als eine Referenztemperatur entsprechend zum beurteilten Reifungsgrad ist, falls ein niedriger Salzgehalt festgestellt wird, und
Justieren (263) der Speichertemperatur auf einen geringeren Wert als die Referenztemperatur, falls ein hoher Salzgehalt festgestellt wird.

3. Steuerverfahren nach Anspruch 1, wobei bei Beurteilung (351), dass der Reifungszustand in einem Endstadium ist, die Speichertemperatur eingestellt (361) wird, um gleichmäßig niedriger als die vorliegende Speichertemperatur um eine erste Temperatur zu sein, falls der beurteilte Salzgehalt ein Referenzsalzgehalt entsprechend zum Reifungsgrad im Endstadium ist;
die Speichertemperatur eingestellt (362) wird, um gleichmäßig niedriger als die vorliegende Speichertemperatur um eine zweite Temperatur zu sein, falls festgestellt (352) wird, dass der Salzgehalt geringer als der Referenzsalzgehalt ist, und
die Speichertemperatur eingestellt (363) wird, um gleichmäßig geringer als die gegenwärtige Speichertemperatur um eine dritte Temperatur zu sein, falls beurteilt wird, dass der Salzgehalt höher als der Referenzsalzgehalt ist.

4. Steuerverfahren nach Anspruch 3, wobei die zweite Temperatur geringer als die erste Temperatur und die dritte Temperatur höher als die erste Temperatur ist.

5. Steuerverfahren nach Anspruch 1, wobei der Salzgehalt des fermentierten Nahrungsmittels gemessen (240) wird, bei Feststellen (231), dass der Reifungsgrad in einem mittleren Stadium ist und bei Feststellen (251), dass der Reifungsgrad in dem mittleren Stadium ist, die Speichertemperatur justiert wird, sodass sie höher ist als eine Referenztemperatur entsprechend zum Reifungsgrad im mittleren Stadium, falls beurteilt wird, dass der Salzgehalt gering ist, und auf eine Temperatur justiert wird, geringer als die Referenztemperatur, falls beurteilt wird, dass der Salzgehalt hoch ist.

6. Steuerverfahren nach Anspruch 5, wobei die Speichertemperatur auf eine Referenztemperatur entsprechend zum Reifungsgrad in dem Anfangsstadium eingestellt wird, falls beurteilt wird, dass der Reifungsgrad in dem Anfangsstadium ist, und die Speichertemperatur gleichmäßig geringer als die gegenwärtige Temperatur um eine ausgewählte Temperatur eingestellt wird, falls festgestellt wird, dass der Reifungsgrad in dem Endstadium ist.

7. Steuerverfahren nach Anspruch 6, wobei bei Feststellung, dass der Reifungsgrad in dem Endstadium ist, die Speichertemperatur eingestellt wird, sodass sie gleichmäßig niedriger als die gegenwärtige Speichertemperatur um eine erste Temperatur ist, falls der in dem mittleren Stadium gemessene Salzgehalt ein Referenzsalzgehalt entsprechend zum Reifungsgrad im mittleren Stadium ist;
die Speichertemperatur gleichmäßig niedriger als die gegenwärtige Speichertemperatur um eine zweite Temperatur eingestellt wird, falls der in dem mittleren Stadium gemessene Salzgehalt geringer als der Referenzsalzgehalt ist, und
die Speichertemperatur gleichmäßig geringer als die gegenwärtige Speichertemperatur um eine dritte Temperatur eingestellt wird, falls der in dem mittleren Stadium gemessene Salzgehalt höher als der Referenzsalzgehalt ist.

8. Steuererfahren nach Anspruch 7, wobei die zweite Temperatur geringer als die erste Temperatur und die dritte Temperatur höher als die erste Temperatur ist.

9. Kühlschrank (10) für fermentierte Lebensmittel, welche aufweist:
eine Säuregehaltmesseinheit (111) zur Messung des Säuregehalts eines fermentierten Lebensmittels;
eine Salzgehaltmesseinheit (112) zur Messung des Salzgehaltes des fermentierten Lebensmittels, und
eine Steuereinheit (120) zur Beurteilung, ob ein Reifungsgrad des fermentierten Lebensmittels entsprechend zum durch die Salzgehaltmesseinheit gemessenen Salzgehaltes einem Anfangszustand, einen Mittelzustand oder einem Endzustand entspricht, zur Beurteilung, ob der durch die Salzgehaltmesseinheit gemessene Salzgehalt hoch oder niedrig entsprechend zum beurteilten Reifungsgrad ist und zum Justieren einer Speichertemperatur gemäß des beurteilten Salzgehalts.

10. Kühlschrank für fermentiertes Nahrungsmittel nach Anspruch 9, welcher weiterhin aufweist:
eine Speichereinheit (130), um eine Referenztemperatur und einen Referenzsalzgehalt entsprechend zum Reifegrad in jedem Zustand zu speichern, wobei
die Steuereinheit (120) die Speichertemperatur höher als die in der Speichereinheit abgespeicherte Referenztemperatur einstellt, falls festgestellt wird, daß der Salzgehalt niedrig ist, und
die Steuereinheit (120) die Speichertemperatur geringer als die Referenztemperatur einstellt, falls festgestellt wird, daß der Salzgehalt hoch ist.

11. Kühlschrank für fermentiertes Nahrungsmittel nach Anspruch 10, wobei bei Beurteilung, dass der Reifungsgrad in dem Endzustand ist, die Steuereinheit (120) die Speichertemperatur gleichmäßig niedriger als die gegenwärtige Speichertemperatur gemessen durch die Temperaturmesseinheit um eine erste Temperatur einstellt, bei Beurteilten, dass der Referenzsalzgehalt entsprechend zum Reifungsgrad in dem Endstadium ist;
die Steuereinheit (120) die Speichertemperatur gleichmäßig geringer als die gegenwärtige Speichertemperatur um einen zweiten Temperaturwert einstellt, falls der Salzgehalt geringer als der Referenzsalzgehalt ist, und
die Steuereinheit (120) die Speichertemperatur gleichmäßig geringer als die gegenwärtige Speichertemperatur um eine dritte Temperatur einstellt, falls der Salzgehalt höher als der Referenzsalzgehalt ist.

12. Kühlschrank für fermentiertes Nahrungsmittel nach Anspruch 11, wobei die zweite Temperatur geringer als die erste Temperatur und die dritte Temperatur höher als die erste Temperatur ist.

13. Kühlschrank für fermentiertes Nahrungsmittel nach Anspruch 9, welcher weiterhin eine Speichereinheit (130) zum Speichern einer Referenztemperatur und eines Referenzsalzgehalts entsprechend zum Reifungsgrad in jedem Stadium aufweist, wobei die Steuereinheit (120) die Salzgehaltmesseinheit steuert, um den Salzgehalt des fermentierten Nahrungsmittels bei Beurteilen, dass der Reifungsgrad in dem Mittelzustand ist, zu messen;
die Steuereinheit (120) die Speichertemperatur höher als die Referenztemperatur entsprechend zum Reifungsgrad im mittleren Zustand einstellt, der in der Speichereinheit abgespeichert ist, falls der gemessene Salzgehalt in dem mittleren Zustand als gering festgestellt wird, und
die Steuereinheit (120) die Speichertemperatur geringer als die Referenztemperatur einstellt, falls der gemessene Salzgehalt als hoch beurteilt wird.

14. Kühlschrank für fermentiertes Nahrungsmittel nach Anspruch 13, welcher weiterhin aufweist:
eine Temperaturmesseinheit (113) zur Messung der gegenwärtigen Speichertemperatur des fermentierten Nahrungsmittels, wobei die Steuereinheit (120) die Speichertemperatur auf Referenztemperatur entsprechend zum Reifungsgrad in einem Anfangszustand justiert, welcher in der Speichereinheit (130) abgespeichert ist, bei Beurteilen, dass der Reifungsgrad in dem Anfangszustand ist, und
die Steuereinheit (120) die Speichertemperatur gleichmäßig geringer als die vorliegende Speichertemperatur gemessen durch die Temperaturmesseinheit um eine ausgewählte Temperatur einstellt, bei Beurteilen, dass der Reifungsgrad in dem Endzustand ist.

15. Kühlschrank für fermentiertes Nahrungsmittel nach Anspruch 14, wobei bei Beurteilen, dass der Reifungsgrad in dem Endzustand ist, die Steuereinheit (120) die Speichertemperatur gleichmäßig geringer als die gegenwärtige Speichertemperatur um eine erste Temperatur einstellt, falls der gemessene Salzgehalt der Referenzsalzgehalt entsprechend zum Reifungsgrad im mittleren Zustand ist;
die Steuereinheit (120) die Speichertemperatur gleichmäßig geringer als die gegenwärtige Speichertemperatur um eine zweite Temperatur einstellt, falls der Salzgehalt geringer als der Referenzsalzgehalt ist, und
die Steuereinheit (120) die Speichertemperatur gleichmäßig geringer als die gegenwärtige Speichertemperatur um eine dritte Temperatur einstellt, falls der Salzgehalt höher als der Referenzsalzgehalt ist.

## Revendications

1. Procédé de commande d'un réfrigérateur pour aliments fermentés (10) comprenant de :
mesurer (210) l'acidité d'un aliment fermenté et juger (231, 232) si un degré d'affinage de l'aliment fermenté en fonction de l'acidité mesurée correspond à un stade initial, un stade intermédiaire, ou un stade avancé ;
mesurer (240) la salinité de l'aliment fermenté et juger (251, 252) si la salinité mesurée est élevée ou faible selon le degré d'affinage jugé ; et
ajuster (261, 262, 263) une température de stockage en fonction de la salinité jugée.

2. Procédé de commande selon la revendication 1, dans lequel :
la température de stockage est ajustée (262) pour être supérieure à une température de référence correspondant au degré d'affinage jugé, lorsqu'il est jugé que la salinité est faible ; et
la température de stockage est ajustée (263) pour être inférieure à la température de référence, lorsqu'il est jugé que la salinité est élevée.

3. Procédé de commande selon la revendication 1, dans lequel, lorsqu'il est jugé (351) que le degré d'affinage est au stade avancé :
la température de stockage est établie (361) pour être uniformément inférieure à la température de stockage actuelle d'une première température, lorsqu'il est jugé que la salinité est une salinité de référence correspondant au degré d'affinage au stade avancé ;
la température de stockage est établie (362) pour être uniformément inférieure à la température de stockage actuelle d'une deuxième température, lorsqu'il est jugé (352) que la salinité est inférieure à la salinité de référence ; et
la température de stockage est établie (363) pour être uniformément inférieure à la température de stockage actuelle d'une troisième température, lorsqu'il est jugé que la salinité est supérieure à la salinité de référence.

4. Procédé de commande selon la revendication 3, dans lequel :
la deuxième température est inférieure à la première température ; et
la troisième température est supérieure à la première température.

5. Procédé de commande selon la revendication 1, dans lequel :
la salinité de l'aliment fermenté est mesurée (240) lorsqu'il est jugé (231) que le degré d'affinage est au stade intermédiaire ; et
lorsqu'il est jugé (251) que le degré d'affinage est au stade intermédiaire, la température de stockage est ajustée pour être supérieure à une température de référence correspondant au degré d'affinage au stade intermédiaire, lorsqu'il est jugé que la salinité est faible, et est ajustée pour être inférieure à la température de référence, lorsqu'il est jugé que la salinité est élevée.

6. Procédé de commande selon la revendication 5, dans lequel :
la température de stockage est établie à une température de référence correspondant au degré d'affinage au stade initial, lorsqu'il est jugé que le degré d'affinage est au stade initial ; et
la température de stockage est établie pour être uniformément inférieure à la température actuelle d'une température désignée, lorsqu'il est jugé que le degré d'affinage est au stade avancé.

7. Procédé de commande selon la revendication 6, dans lequel, lorsqu'il est jugé que le degré d'affinage est au stade avancé :
la température de stockage est établie pour être uniformément inférieure à la température de stockage actuelle d'une première température, si la salinité mesurée au stade intermédiaire est une salinité de référence correspondant au degré d'affinage au stade intermédiaire ;
la température de stockage est établie pour être uniformément inférieure à la température de stockage actuelle d'une deuxième température, si la salinité mesurée au stade intermédiaire est inférieure à la salinité de référence ; et
la température de stockage est établie pour être uniformément inférieure à la température de stockage actuelle d'une troisième température, si la salinité mesurée au stade intermédiaire est supérieure à la salinité de référence.

8. Procédé de commande selon la revendication 7, dans lequel :
la deuxième température est inférieure à la première température ; et
la troisième température est supérieure à la première température.

9. Réfrigérateur pour aliments fermentés (10) comprenant :
une unité de mesure d'acidité (111) pour mesurer l'acidité d'un aliment fermenté ;
une unité de mesure de la salinité (112) pour mesurer la salinité de l'aliment fermenté ; et
une unité de commande (120) pour juger si un degré d'affinage de l'aliment fermenté conformément à l'acidité mesurée par l'unité de mesure d'acidité correspond à un stade initial, un stade intermédiaire, ou un stade avancé, pour juger si la salinité mesurée par l'unité de mesure de salinité est élevée ou faible conformément au degré d'affinage jugé, et pour ajuster une température de stockage conformément à la salinité jugée.

10. Réfrigérateur pour aliments fermentés selon la revendication 9, comprenant en outre
une unité de mémoire (130) pour stocker une température de référence et une salinité de référence correspondant au degré d'affinage de chaque stade, dans lequel
l'unité de commande (120) établit la température de stockage à une température supérieure à la température de référence stockée dans l'unité de mémoire, lorsqu'il est jugé que la salinité est faible ; et
l'unité de commande (120) établit la température de stockage à une température inférieure à la température de référence, lorsqu'il est jugé que la salinité est élevée.

11. Réfrigérateur pour aliments fermentés selon la revendication 10, dans lequel, lorsqu'il est jugé que le degré d'affinage est au stade tardif :
l'unité de commande (120) établit la température de stockage pour être uniformément inférieure à la température de stockage actuelle mesurée par l'unité de mesure de température d'une première température, lorsqu'il est jugé que la salinité est une salinité de référence correspondant au degré d'affinage au stade avancé ;
l'unité de commande (120) établit la température de stockage pour être uniformément inférieure à la température de stockage actuelle d'une deuxième température, si la salinité est inférieure à la salinité de référence ; et
l'unité de commande (120) établit la température de stockage pour être uniformément inférieure à la température de stockage actuelle d'une troisième température, si la salinité est supérieure à la salinité de référence.

12. Réfrigérateur pour aliments fermentés selon la revendication 11, dans lequel :
la deuxième température est inférieure à la première température ; et
la troisième température est supérieure à la première température.

13. Réfrigérateur pour aliments fermentés (10) selon la revendication 9, comprenant en outre une unité de mémoire (130) pour stocker une température de référence et une salinité de référence correspondant au degré d'affinage de chaque stade, dans lequel :
l'unité de commande (120) commande l'unité de mesure de salinité pour mesurer la salinité de l'aliment fermenté lorsqu'il est jugé que le degré d'affinage est au stade intermédiaire ;
l'unité de commande (120) établit la température de stockage à une température supérieure à la température de référence correspondant au degré d'affinage au stade intermédiaire stockée dans l'unité de mémoire, si la salinité mesurée au stade intermédiaire est jugée comme étant faible ; et
l'unité de commande (120) établit la température de stockage à une température inférieure à la température de référence, si la salinité mesurée est jugée comme étant élevée.

14. Réfrigérateur pour aliments fermentés selon la revendication 13, comprenant en outre :
une unité de mesure de température (113) pour mesurer la température de stockage actuelle de l'aliment fermenté, dans lequel :
l'unité de commande (120) ajuste la température de stockage à la température de référence correspondant au degré d'affinage au stade initial stockée dans l'unité de mémoire (130), lorsqu'il est jugé que le degré d'affinage est au stade initial ; et
l'unité de commande (120) établit la température de stockage pour être uniformément inférieure à la température de stockage actuelle mesurée par l'unité de mesure de température d'une température désignée, lorsqu'il est jugé que le degré d'affinage est au stade avancé.

15. Réfrigérateur pour aliments fermentés selon la revendication 14, dans lequel, lorsqu'il est jugé que le degré d'affinage est au stade avancé :
l'unité de commande (120) établit la température de stockage pour être uniformément inférieure à la température de stockage actuelle d'une première température, si la salinité mesurée est une salinité de référence correspondant au degré d'affinage au stade intermédiaire ;
l'unité de commande (120) établit la température de stockage pour être uniformément inférieure à la température de stockage actuelle d'une deuxième température, si la salinité est inférieure à la salinité de référence ; et
l'unité de commande (120) établit la température de stockage pour être uniformément inférieure à la température de stockage actuelle d'une troisième température, si la salinité est supérieure à la salinité de référence.
